Europäisches Patentamt

European Patent Office

Office européen des brevets

(11) Publication number: **0 017 305**

**A1**

(12) **EUROPEAN PATENT APPLICATION**

(21) Application number: 80300178.3

(22) Date of filing: 18.01.80

(51) Int. Cl.³: **C 02 F 3/12**
**C 02 F 3/22**

(30) Priority: 29.01.79 GB 7903000
13.02.79 GB 7904979

(43) Date of publication of application:
15.10.80 Bulletin 80/21

(84) Designated Contracting States:
AT BE CH DE FR IT LU NL SE

(71) Applicant: PATERSON CANDY INTERNATIONAL
LIMITED
21, The Mall Ealing
London W5 2PU(GB)

(72) Inventor: Brignal, William Johnson
4 Firtree Corner Baughurst
Basingstoke, Hampshire(GB)

(72) Inventor: Stevenson, David Gordon
Firstone Adbury Holt Newtown
Nr. Reading, Berkshire(GB)

(74) Representative: Higgins, Michael Roger et al,
Marks & Clerk 57/60 Lincoln's Inn Fields
London WC2A 3LS(GB)

(54) A method and apparatus for treating biologically degradable waste.

(57) Activated sludge is circulated at a first stage around a system comprising a downcomer 12 and a riser 13 communicating with each other at their upper and lower ends, an oxygen-containing gas being supplied to the sludge as it passes through the downcomer or riser or both. Aerated sludge is then fed to a second stage (15) in which it is mixed with raw sewage and in which absorption, adsorption and/or biosorption of sewage occurs. Subsequently, the resulting mixutre is fed to a third stage (18) where the sludge and liquid are separated. The separated liquid is decanted and at least part of the separated sludge is returned to the downcomer/riser system.

./...

Croydon Printing Company Ltd.

"Treatment of Biologically-Degradable Waste"

This invention relates to a method and apparatus for the treatment of liquid borne biologically-degradable waste material hereinafter referred to for convenience as sewage.

Methods commonly used in the treatment of sewage comprise an initial treatment by screening and sedimentation to remove coarse and heavy material followed by a further treatment employing biological methods to remove organic materials. The present invention relates in particular to the further treatment stage.

In the well known activated sludge process raw sewage, after initial treatment, is circulated for a period of 7 - 8 hours in an aerated tank so that organic materials are oxidised or converted into activated sludge by biological action promoted by the micro-organisms present in the sewage. The activated sludge is then separated from the liquid component of the sewage in settling tanks. Most of the activated sludge may then be fed back so as to mix with the sewage in the aerated tank whilst the excess sludge is then ultimately disposed of.

It is also well known to replace the aerated tank with a so-called deep shaft as, for example, described in BP. 1,473,665 in which sewage is caused to circulate around a system including a down-comer and a riser during which an oxygen containing gas (commonly air) is introduced into the sewage in the down-comer.

This has resulted in an increased transfer rate for oxygen in the aerating gas into the sewage and in a considerable reduction in the land area required for sewage treatment plants.

The Biosorption process resulted from the discovery that if activated sludge is mixed with sewage in an aeration tank and samples are removed at regular intervals of time, the amount of organic matter, i.e. the biological oxygen demand (B.O.D.) loading of the settled supernatent followed a curve wherein there was an immediate drop in the B.O.D. followed by a rise and a second drop. The Biosorption process comprises mixing the raw sewage, after initial treatment, with a high concentration of activated sludge for 20 to 60 min. to assimilate the organic material on to the activated sludge by absorption, adsorption and/or biosorption. The sludge is then separated from the supernatant liquor in a settling tank and concentrated sludge is then aerated to stabilise the organic matter and to renew the activated sludge surfaces in an aerating tank before it is returned for re-mixing with the influent sewage. Excess sludge is disposed of in any convenient manner.

The invention provides in one aspect a method of treating sewage, comprising at a first stage circulating activated sludge around a system comprising a downcomer (i.e. a chamber of descending flow) and a riser

(i.e. a chamber of ascending flow) communicating with each other at their upper and lower ends, an oxygen-containing gas (as hereinbefore defined) being supplied to the sludge as it passes through the downcomer, feeding the aerated sludge to a second stage in which it is mixed with influent sewage and in which absorption, adsorption and/or biosorption of sewage occurs and subsequently feeding the resulting mixture to a third stage where the sludge and liquid are separated, the separated liquid being removed and at least part of the separated sludge being returned to said first stage.

The phrase oxygen-containing gas is to be understood to mean oxygen or any gaseous mixture, such as air, containing oxygen.

Preferably, the downcomer is of such a length that the oxygen transfer rate into the sludge is at least $0.1 \text{ kg } O_2/\text{hr/m}^3$ of shaft volume.

Preferably, the mixture of influent sewage and sludge remains in the second stage for a period substantially not in excess of 1 hr.

Preferably, the second stage includes a step in which the sludge is maintained in suspension by air bubbles.

The invention provides in another aspect, apparatus for performing the method as claimed in claim 1, comprising a sludge stabiliser in which activated sludge is circulated.

4

in such a manner that it becomes aerated, and one or more biosorption treatment vessels communicating with the sludge stabiliser, means for feeding aerated sludge and influent sewage to said biosorption treatment vessel or vessels, means for feeding the sludge/sewage mixture from the biosorpti treatment vessel or vessels to separating means communicating therewith, means for returning at least some of the sludge which is, in use, separated from the liquid in the separating means to the sludge stabiliser and means for removing the liquid in the separating means, the stabiliser comprising a downcomer and a riser communicating with each other at their upper and lower ends, means for circulating sludge through the down-comer and riser, and means for supplying an oxygen-containing gas to the sludge in the down-comer.

It is to be understood that in some cases the means for supplying an oxygen-containing gas to sludge in the down-comer may function also as the means for circulating sludge.

Preferably, the apparatus further comprises means for introducing air into the mixture, in use, in said biosorption vessel or vessels. Alternatively, or additiona: the apparatus also comprises means for generating air bubble: within the mixture, in use, in said biosorption vessel or vessels.

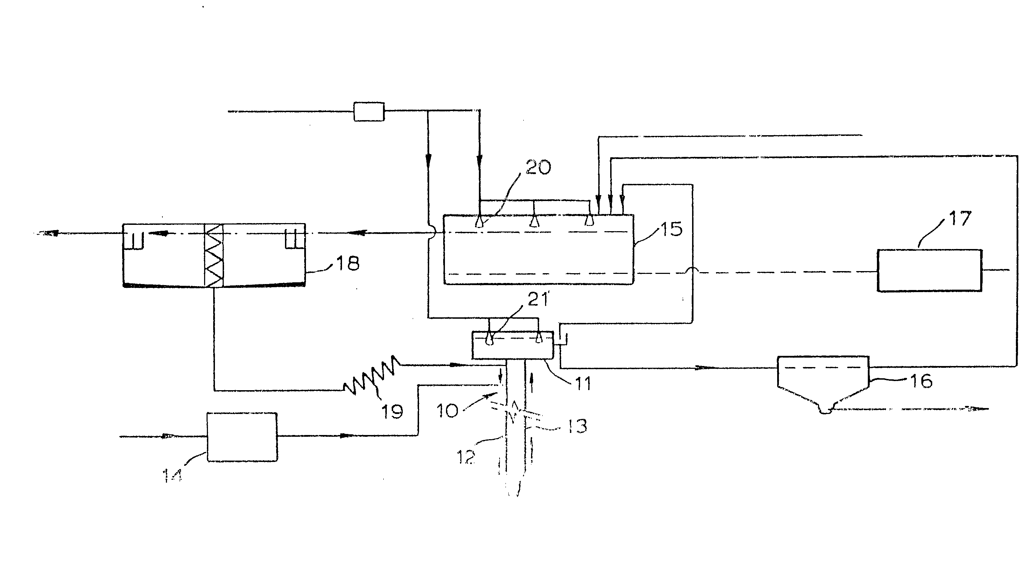

The invention will now be more particularly described with reference to the accompanying drawing which is a scematic diagram of one embodiment of sewage treatment apparatus according to the invention.

Referring to the drawing, the apparatus shown therein includes a sludge stabiliser 10 comprising a basin 11, located at ground level, and a downcomer 12 and riser 13 located in a hole formed in the ground below basin 11. The upper ends of the downcomer 12 and riser 13 open into the bottom of the basin 11 and their lower ends communicate with each other. An air compressor 14 is connected via control valves (not shown) to spargers (not shown) in the downcomer 12 and riser 13. The spargers normally introduce gas into both the downcomer and riser at a position between 0.1 and 0.6 times their total length below the level of sludge in the basin. The effective cross-sectional area of the riser may be, but is not necessarily, greater than that of the downcomer and the downcomer and riser may, for example, be formed on either side of a partition wall mounted in a concrete lined shaft.

The downcomer 12 and riser 13 will normally extend at least 20 metres and more probably in the range 50 - 100 metres below the basin and although, normally, located in the ground for aesthetic reasons may extend partially or wholly above ground level. The stabiliser is commonly referred to in the art as a "deep shaft".

Activated sludge is fed to the basin 11 or downcomer 12 as described hereinafter. Circulation of the sludge around the system comprising downcomer 12, riser 13 and basin 11 is initiated by introducing air from compressor 14 via an associated control valve into riser 13, the upper part of which then acts as an air-lift pump and sludge begins to circulate around the system in the direction indicated by the arrows. When the flow rate reaches a predetermined value, the supply of air to the riser 13 is gradually reduced whilst air in gradually increasing quantities is introduced into the downcomer 12 from the air compressor 14 via an associated control valve. When the sludge attains a preset circulation rate all or most of the air is introduced into downcomer 12, although thereafter the flow rate may be adjusted by altering the quantities of air introduced into the downcomer 12 and riser 13.

Aerated sludge is normally drawn from the basin 11 and fed directly to a biosorption treatment vessel comprising a tank 15.

Influent sewage after initial treatment by screening and/or sedimentation is also fed to the tank 15. The sludge and influent sewage are mixed together in tank 15 and this mixture remains in the tank 15 for a period not substantially exceeding 1 hr and normally for a much shorter period of, say, 20 - 40 mins during which time the organic material in the sewage will be assimilated by absorption, adsorption and/or biosorption on to the activated sludge. The mixture is then fed from the tank 15 to a clarifier 18.

Activated sludge passing from the first stage to the second stage is super-saturated with gas by virtue of the high hydrostatic pressure it experiences within the deep shaft.

Air is bubbled through the mixture in tank 15. The air is introduced from an air blower through spargers (not shown) situated at the bottom of the tank 15. The air bubbles serve to coalesce and desaturate air from the sewage/sludge mixture.

It is important to minimise the amount of excess dissolved air and air micro-bubbles in the mixture which would otherwise impair the performance of the clarifier. The air bubbles also serve to maintain the sludge in suspension.

As an alternative to or in addition to introducing air into the mixture through spargers as aforesaid the mixture can be subjected to mechanical surface aeration and excess dissolved air and micro-bubbles can be freed from the mixture by such means as mechanical mixing or agitation.

The sludge will separate from the liquid in the clarifier and clear effluent can, thus, be decanted whilst the sludge can be returned to the basin 11 or downcomer 12 by a pump 19.

The surface of the mixture in tank 15 can be sprayed with water through nozzles 20 to disperse any foam forming as a result of foaming agents being present in the incoming sewage. Likewise, the surface of the sludge in basin 11 may be sprayed through nozzles 21.

The tank 15 may be partitioned to provide an initial turbulent zone in which air is bubbled through the mixture, and a second quiescent zone.

The clarifier 18 may be a settling tank.

In a conventional deep shaft plant in which sewage is fed to the deep shaft, the mixed liquor suspended solids concentration in the deep shaft will not normally exceed 5,000 mg/l, for example, since otherwise the performance of the clarifier may be seriously impaired. However, in the above described apparatus, activated sludge from the deep shaft is diluted with influent sewage before passing to the clarifier, hence the concentration in the deep shaft will only be limited by the concentration after dilution in the biosorption trident vessel and may be up to 10,000 mg/l or higher. The volume of the shaft may thus be decreased by an inverse proportion to the deep shaft concentration which will result in substantial savings.

Moreover, in the above-described apparatus excess sludge will be taken off directly from the deep shaft and will be aerated and more stable than heretofore.

The period not substantially exceeding 1 hr and normally much shorter, e.g. 20 - 40 mins during which the mixture remains in tank 15 is based on the average flow of influent sewage and average flow of returned activated sludge to the tank 15.

9

CLAIMS:

1. A method for the treatment of sewage comprising a first stage circulating activated sludge around a system comprising a downcomer (i.e. a chamber of descending flow) and a riser (i.e. a chamber of ascending flow) communicating with each other at their upper and lower ends, an oxygen-containing gas (as hereinbefore defined) being supplied to the sludge as it passes through the downcomer or the riser or both, feeding the aerated sludge to a second stage in which it is mixed with influent sewage and in which absorption, adsorption and/or biosorption of sewage occurs and subsequently feeding the resulting mixture to a third stage where the sludge and liquid are separated, the separated liquid being removed and at least part of the separated sludge being returned to said system.

2. A method as claimed in claim 1, characterised in that the downcomer is of such a length that the oxygen transfer rate into the sludge is at least 0.1 kg $O_2$/hr/m$^3$ of deep shaft volume.

3. A method as claimed in claim 1 or 2, characterised in that the influent sewage and recirculated sludge mixture remains in the second stage for a period substantially not in excess of 1 hr.

4. A method as claimed in anyone of claims 1 to 3, characterised in that the second stage includes a step in which the sludge is maintained in suspension by air bubbles.

5. A method as claimed in claim 4, characterised in that the second stage includes a step in which the sludge is maintained in suspension by mechanical mixing, agitation, surface aeration and/or submerged aeration.

6. A method as claimed in claim 4 or 5, characterised in that the second stage includes a turbulent zone and a quiescent zone.

7. Apparatus for performing the method as claimed in claim 1, comprising a sludge stabiliser in which activated sludge is circulated in such a manner that it becomes aerated, one or more biosorption treatment vessels communicating with the sludge stabiliser, means for feeding aerated sludge and influent sewage to said biosorption treatment vessel or vessels, means for feeding the sludge/sewage mixture from the biosorption treatment vessel or vessels to separating means communicating therewith, means for returning at least some of the sludge which is, in use, separated from the liquid in the separating means to the sludge stabiliser and means for removing the liquid in the separating means, the stabiliser comprising a downcomer and a riser communicating with each other at their upper and lower ends, means for circulating sludge through the downcomer and riser, and means for supplying an oxygen-containing gas to the sludge in the downcomer and/or riser.

8.   Apparatus as claimed in claim 7, further comprising means for introducing air into the mixture, in use, in said biosorption treatment vessel or vessels.

9.   Apparatus as claimed in claim 7, further comprising means for generating air bubbles within the mixture, in use, in said biosorption treatment vessel or vessels.

## EUROPEAN SEARCH REPORT

Application number

EP 80 30 0178

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | US - A - 4 069 147 (E. ABRAMS et al. ) <br><br> * Column 4, lines 28-55; column 7, line 51 - column 8, line 14; column 12, lines 5-44 * <br><br> -- | 1,3-5, 7-9 | C 02 F 3/12 <br> 3/22 |
| DA | GB - A - 1 473 665 (ICI) | | |
| A | GB - A - 1 527 731 (ICI) <br><br> ---- | | |

**TECHNICAL FIELDS SEARCHED (Int.Cl.)**

C 02 F 3/22
3/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-04-1980 | TEPLY |

EPO Form 1503.1  06.78